# EUROPEAN PATENT SPECIFICATION

(11) **EP 3 042 578 B1**
(45) Date of publication and mention of the grant of the patent: **05.04.2017**
(21) Application number: 14879278.1
(22) Date of filing: 14.11.2014
(51) Int. Cl.: A24F 47/00

(54) **ELECTRONIC CIGARETTE**
ELEKTRONISCHE ZIGARETTE
CIGARETTE ÉLECTRONIQUE

(43) Date of publication of application: 13.07.2016
(73) Proprietor: Shenzhen Smoore Technology Limited, Shenzhen, Guangdong 518102 (CN)
(72) Inventor: CHEN, Zhiping, Shenzhen Guangdong 518102 (CN)
(74) Representative: Westphal, Mussgnug & Partner Patentanwälte mbB
(86) International application number: PCT/CN2014/091158
(87) International publication number: WO 2016/074231

(56) References cited:
- WO-A1-2011/147714
- WO-A1-2013/149404
- CN-A- 104 082 863
- CN-A- 104 382 237
- CN-U- 203 040 683
- CN-U- 203 851 819
- CN-U- 203 934 662
- CN-U- 204 191 593
- US-A1- 2013 319 438
- US-A1- 2014 270 730

## Description

### BACKGROUND

### 1. Technical Field

The present disclosure relates to products for smokers, and more particularly relates to an electronic cigarette.

### 2. Description of Related Art

An electronic cigarette in related art is usually as a substitute for cigarette. The electronic cigarette generally includes an atomizer device a battery device. The heating wire disposed within the atomizer device can atomize liquid solution in the atomizer device to generate smoke for allow smoker inhaling. Generally, a liquid cup or an accommodate space separated from the atomizer sleeve acts as the liquid solution reservoir. A liquid partition member is mounted to the top of the reservoir, to seal the reservoir. At the same time, a plurality of penetrating holes are defined on the liquid partition member, to allow the liquid solution flowing out when the electronic cigarette works. However, the electronic cigarette is inclined to be trembled during the transport or storage process, which may result in leakage of liquid solution. In addition, because the liquid penetrating holes are in a completely open state, not only a waste of the liquid solution because no sealing means are provided for preventing the leakage of liquid solution after used, which may result in low utilization rate of liquid solution, but the quantity of liquid solution can also not be adjusted according to smoker's needs, which may result in poor flexibility. The publications WO 2013/149404 A1 and US 2013/0319438 A1 generally relate to electronic cigarettes and respective mouthpieces. The publication WO 2011/147714 A1 describes an aerosol generator for generating aerosol for inhalation by a consumer. the publication US 2014/0270730 A1 describes an atomizer for an electronic cigarette.

### SUMMARY

The technical problem of the present invention is to provide an improved electronic cigarette.

To overcome the above mentioned disadvantage, an electronic cigarette is provided. The electronic cigarette includes a cartridge and an atomizer device. The cartridge includes a liquid reservoir chamber and liquid outlets for communicating the internal of the liquid reservoir chamber with the outside. The atomizer device includes a liquid reservoir room and liquid inlets for communicating the internal of the liquid reservoir room with the outside. The cartridge is mounted to the atomizer device, and is capable of rotating relatively to the atomizer device between a first position A and a second position B. When the cartridge is located at the first position A, the liquid outlets align with the liquid inlets, to communicate the liquid reservoir chamber with the liquid reservoir room. When the cartridge is located at the second position B, the liquid outlets misalign with the liquid inlets, to disconnect the liquid reservoir chamber with the liquid reservoir room. The cartridge can rotate relatively to the atomizer device between a first position A and a second position B, to drive the liquid outlets aligning with or misaligning with the inlets, to achieve the purpose of injecting liquid solution to or partition the atomizer device, to achieve liquid injection process being convenient. The amount of injection liquid solution can be adjusted, and leakage of liquid solution can be avoided during the transport or storage process, and higher utilization rate of liquid solution can be further achieved.

Wherein, the cartridge and the atomizer device are installed together coaxially, the cartridge is capable of rotating around the axis thereof relatively to the atomizer device between the first position A and the second position B; the at least one liquid inlet is defined at an end portion of the atomizer device opposite to the cartridge, and the at least one liquid outlet is defined at an end portion of the cartridge opposite to the atomizer device.

Wherein, the cartridge includes a first air flowing channel arranged longitudinally, the liquid reservoir chamber encircles the first air flowing channel; the atomizer device includes a second air flowing channel arranged longitudinally, the liquid reservoir room encircles the second air flowing channel, and the first air flowing channel communicates with the second air flowing channel.

Wherein, the cartridge includes a first wall portion facing the atomizer device, the at least one liquid outlet is defined on the first wall portion; the atomizer device includes a second wall portion facing the cartridge, the first wall portion is rotatable around the axis and abuts against the second wall portion, the at least one liquid inlet is defined on the second wall portion.

Wherein, the at least one liquid inlet includes two liquid inlets arranged symmetrically at the second wall portion; the at least one liquid outlet includes two liquid outlets arranged symmetrically at the first wall portion.

Wherein, the shape of the liquid outlets and the liquid inlets are both fan-shaped, the two liquid outlets are rotationally symmetrical relatively to the center of the axis, the two liquid inlets are rotationally symmetrical relatively to the center of the axis.

Wherein, the cartridge includes a cartridge body and a first cover body arranged at an end portion of the cartridge body, the cartridge body includes a first air flowing pipe defining the first air flowing channel, the first wall portion is arranged on the first cover body, the first cover body engages with the cartridge body in interference fit; the first cover body defines a sleeving hole at the middle thereof, the sleeving hole sleeves the outside of the first air flowing pipe.

Wherein, the atomizer device includes a second cover body engaging with the cartridge, the second wall portion is arranged on the second cover body; the second cover body includes a plastic sealing base which is integrally formed and an elastic glue sealing gasket, the sealing gasket is clipped between the sealing base and the first cover body, the liquid inlets extends through the sealing base and the sealing gasket.

Wherein, a first protruding portion is set on a surface of the sealing gasket facing the first wall portion for reducing friction, the first protruding portion includes a plurality of ring shaped protrusions arranged equidistant from the axis, the protrusions abut against and engage with the first wall portion.

Wherein, a second protruding portion is arranged on a surface of the sealing gasket facing the first wall portion and encircles a rim of the liquid inlets, the second protruding portion abuts against and engages with the first wall portion.

Wherein, the atomizer device includes a base and a second air flowing pipe, the second cover body engages with an open end of the base , the second air flowing pipe is embedded in the base, the second air flowing channel is defined in the second air flowing pipe, the second cover body defines an air vent communicating with the first air flowing channel and the second air flowing channel respectively; the sealing gasket further includes a third protruding portion extending from the outer ring of the air vent toward the inner side of the second air flowing pipe, the third protruding portion engages with the internal wall of the second air flowing pipe.

Wherein, the sealing gasket further includes a fourth protruding portion extending from the outer ring of the air vent toward the inner side of the first air flowing pipe, the fourth protruding portion engages with the internal wall of the first air flowing pipe.

Wherein, at least one latching block is arranged circumferentially on the outer ring of the cartridge corresponding to the atomizer device, the atomizer device defines at least one latching slots engaging with the at least one latching block, the at least one latching slot extend in circumferential direction, to provide rotation space for the cartridge and to limit the first position A and the second position B of the cartridge.

Wherein, the at least one latching block includes two, the two latching blocks are arranged symmetrically at opposite sides of cartridge, the at least one latching slots includes two, the two latching slots are arranged symmetrically at opposite sides of atomizer device.

The electronic cigarette described above has beneficial effects as below: the liquid outlets in the present invention are defined at the cartridge, the liquid inlets are defined at the atomizer device, and the cartridge can rotate relatively to the atomizer device between a first position A and a second position B, to drive the liquid outlets aligning with or misaligning with the liquid inlets, to achieve injecting liquid solution to or partition the atomizer device, to make liquid injection process being convenient. The amount of injection liquid solution can be adjusted, at the same time, the leakage of liquid solution can be avoided during the transport or storage process, and higher utilization rate of liquid solution can be achieved.

### BRIEF DESCRIPTION OF THE DRAWINGS

In combination drawings with embodiments below to further illustrate the present invention, in the drawings:
FIG. 1 is a perspective view of an electronic cigarette according to an embodiment of the present invention.
FIG. 2 is a disassembled view of the electronic cigarette of FIG. 1.
FIG. 3 is a cross-sectional view of the cartridge of FIG. 2 being located in a first position.
FIG. 4 is an assembled view of the first cover body and the atomizer device when the cartridge of FIG. 2 is located in the first position.
FIG. 5 is a cross-sectional view of the cartridge of FIG. 2 being located in a second position.
FIG. 6 is an assembled view of the first cover body and the atomizer device when the cartridge of FIG. 2 is located in the second position.
FIG. 7 is an enlarged cross-sectional view of the atomizer device shown in FIG. 3.

### DETAILED DESCRIPTION

For better understanding technical features, purpose and effect of the present invention, the following explanation in combination with drawings provides specific details for these embodiments of the present invention.

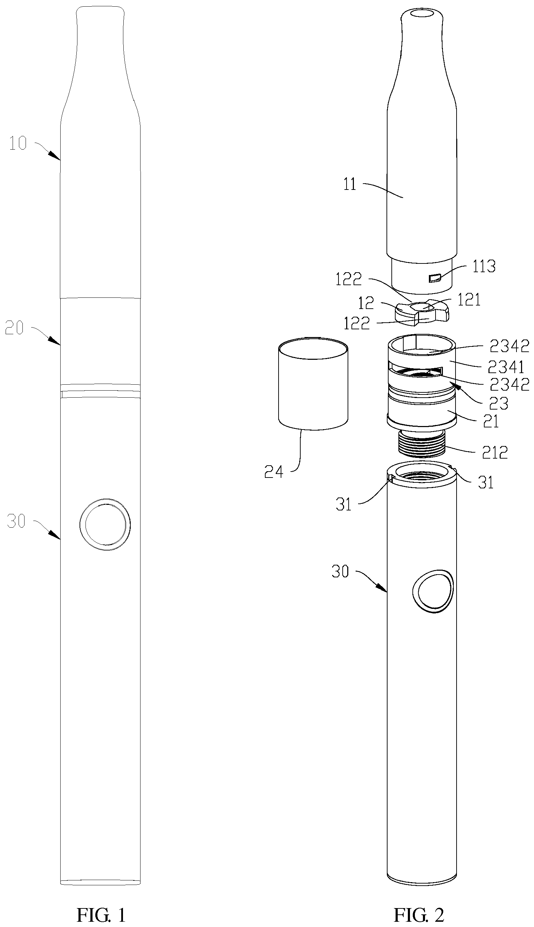

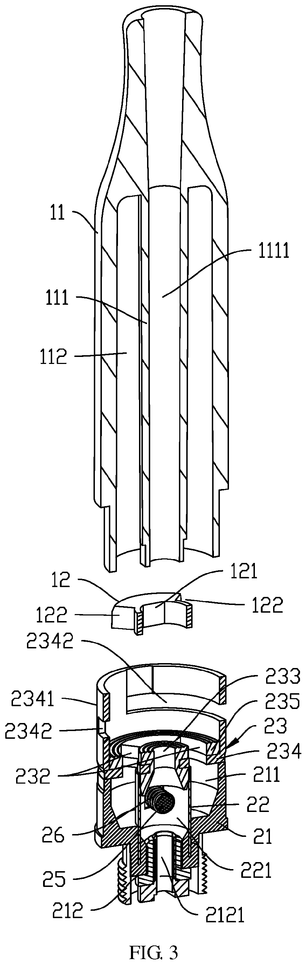

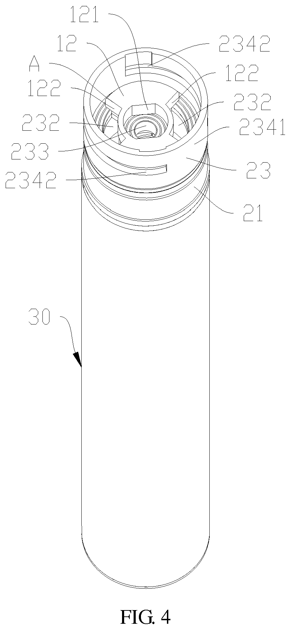

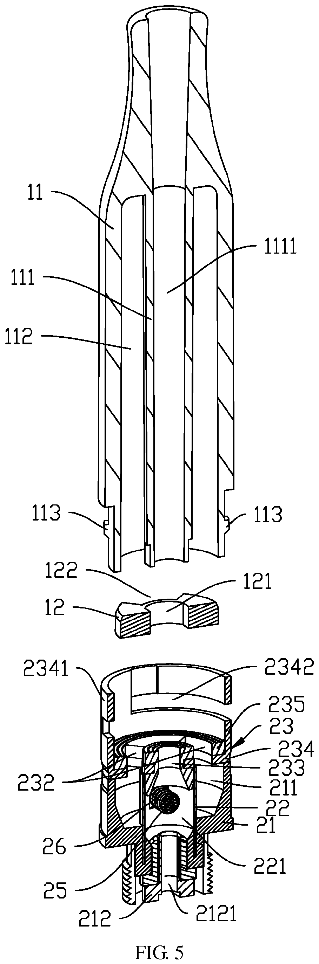

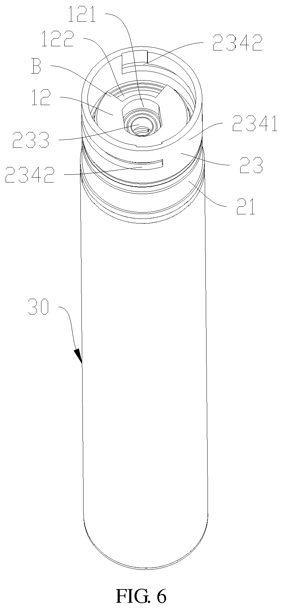

FIGS. 1-6, illustrate an electronic cigarette 1 according to an embodiment of the present invention. The electronic cigarette 1 includes a cartridge 10, an atomizer device 20 and a power supply device 30. The cartridge 10 and the atomizer device 20 are installed together coaxially. The cartridge 10 is capable of rotating around the axis thereof relatively to the atomizer device 20 between a first position A and a second position B, to achieve a channel between the cartridge 10 and the atomizer device 20 being opened or being closed. The atomizer device 20 is connected to the power supply device 30, to atomize the liquid solution by virtue of the power supplied by the power supply device 30.

In some embodiments, the cartridge 10 includes a cartridge body 11 and a first cover body 12 arranged at an end portion of the cartridge body 11 opposite to the atomizer device 20. The first cover body 12 forms the first wall portion of the cartridge 10. The cartridge body 11 includes a first air flowing pipe 111 set longitudinally, and a liquid reservoir chamber 112 encircling the first air flowing pipe 111. The middle of the first air flowing pipe 111 defines a first air flowing channel 1111. In other embodiment, the cartridge body 11 and the first cover body 12 are integrally formed as one-piece. The first cover body 12 defines a sleeving hole 121 at the middle thereof. The sleeving hole 121 sleeves the outside of the first air flowing pipe 111. The first cover body 12 and the cartridge body 10 engage with each other by an interference fit, to achieve a better sealing effect. The first cover body 12 defines two liquid outlets 122 for communicating the internal of the liquid reservoir chamber 112 with the outside. The two liquid outlets 122 are optimally defined symmetrically at the first cover body 12.

The atomizer device 20 in some embodiments includes a base 21, a second air flowing pipe 22, a second cover body 23, a sleeve 24, a liquid suction body 25, and a heating member 26 coiling around the liquid suction body 25. The base 21 is substantially cylindrical. The second air flowing pipe 22 is embedded longitudinally into the bottom of the base 21, to form a liquid reservoir room 211 between the base 21 and the second air flowing pipe 22. Optimally, the base 21 and the second air flowing pipe 22 are integrally formed as one-piece by injection molding. The second air flowing pipe 22 defines a second air flowing channel 221 for airflow. The second cover body 23 engages with an open end of the base 21, to form a second wall portion enclosing the liquid reservoir room 211. When the cartridge 10 is mounted to the atomizer device 20, the first cover body 12 is rotatable around the axis thereof and abuts against the second cover body 23, to maintain the sealing of joint surfaces during rotation. The second cover body 23 defines two liquid inlets 232 for communicating the internal of the liquid reservoir room 211 with the outside, and an air vent 233 communicating with the first air flowing channel 1111 and the second air flowing channel 221 respectively. The two liquid inlets 232 are optimally defined symmetrically at the second cover body 23.

When the cartridge 10 is located at the first position A, the liquid outlet 122 aligns with the liquid inlet 232, to communicate the liquid reservoir chamber 112 with the liquid reservoir room 211, to let the liquid solution in the liquid reservoir 112 flow toward the liquid reservoir room. When the cartridge 10 is located at the second position B, the liquid outlet 122 misaligns with the liquid inlet 232, the liquid reservoir chamber 112 is disconnected with the liquid reservoir room 211, to prevent the liquid solution in the liquid reservoir 112 from flowing toward the liquid reservoir room 211. In other embodiments, the number of the liquid outlets 122 or the liquid inlets 232 can be set one or more, on condition that the liquid outlets 122 can align with the liquid inlets 232 during the cartridge 10 rotates.

Optimally, the shape of the liquid outlets 122 and the liquid inlets 232 are both fan-shaped. The two liquid outlets 122 are rotationally symmetrical relatively to the center of the axis, and the fan-shaped angle of the liquid outlets 122 is less than 90 degrees. The two liquid inlets 232 are rotationally symmetrical relatively to the center of the axis, and the fan-shaped angle of the liquid inlets 232 is less than 90 degrees. The cartridge 10 is rotatable with a range from 0∼90 degrees, to switch positions between a position of the liquid outlets 122 aligning with the liquid inlets 232 and a position of the liquid outlets 122 misaligning with the liquid inlets 232. At the same time, a size of the communication open between the liquid outlets 122 and the liquid inlets 232 are varied according to variation of the rotation angle, to adjust the injection amount.

In other embodiments, the engagement surface between the cartridge 10 and the atomizer device 20 can be arc-shaped, the liquid outlets 122 and the liquid inlets 232 are defined on the arc-shaped engagement surface respectively, the cartridge 10 can do lateral rotation forth and back relatively to the atomizer device 20 to allow the liquid outlets 122 to align with or misalign with the liquid inlets 232, to allow to inject or prevent from injecting liquid to the liquid reservoir room 211.

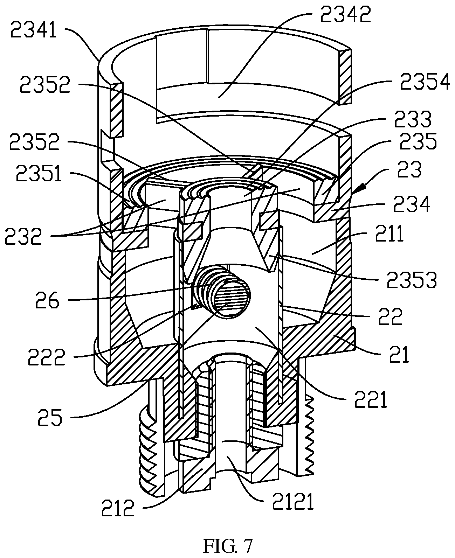

Referring to FIG. 7, in some embodiments, the second cover body 23 includes a plastic sealing base 234 which is integrally formed and an elastic glue sealing gasket 235. The sealing gasket 235 is clipped between the sealing base 234 and the first cover body 12, to achieve sealing effect by virtue of the flexible characteristic of the elastic glue. The liquid inlets 232 extends through the sealing base 234 and the sealing gasket 235.

The sealing gasket 235 includes a first protruding portion 2351 and a second protruding portion 2352 arranged on a surface thereof facing the first cover body 12, a third protruding portion 2353 extending from the outer ring of the air vent 233 toward the inner side of the second air flowing pipe 22, and a fourth protruding portion 2354 extending from the outer ring of the air vent 233 toward the inner side of the first air flowing pipe 111. The first protruding portion 2351 includes a plurality of ring shaped protrusions arranged equidistant from the axis. The protrusions abut against and engage with the first cover body 12. The bearing points between the first cover body 12 and the sealing gasket 235 are exerted on the ring shaped protrusions, but not the whole surface thereof, thereby friction between the first cover body 12 and the sealing gasket 235 can be lessen when the first cover body 12 rotates. As a result, when the cartridge 10 rotates forth and back, the elastic glue sealing gasket 235 can lessen the friction of the rotating first cover body 12, and can also ensure the sealing effect between the sealing gasket 235 and the first cover body 12.

In some embodiments, the second protruding portion 2352 encircles around the rim of the liquid inlets 232. The second protruding portion 2352 abuts against and engages with the first cover body 12, when the cartridge 10 rotates to the second position B, to ensure the sealing effect between the rim of the liquid inlet 232 and the first cover body 12. At the same time, even if a tiny deflection in axial direction between the first cover body 12 and the second cover body 23 is generated, the deformed second protruding portion 2352 still restores to abut against the first cover body 2352, to achieve a better sealing effect.

The third protruding portion 2353 engages with the internal wall of the second air flowing pipe 22, to ensure the sealing effect between the air vent 233 and the second air flowing channel 221. The fourth protruding portion 2354 engages with the internal wall of the first air flowing pipe 111, to ensure the sealing effect between the air vent 233 and the first air flowing channel 1111. It is noteworthy that the second protruding portion 2352 in some embodiment can be omitted.

The sidewall of the second air flowing pipe 22 defines two opposite through holes 222. The liquid suction body 25 is mounted to the through holes 222, to suck the liquid solution i the liquid reservoir room 211. The heating member 26 heats the liquid solution sucked in the liquid suction member 25.

Referring to FIGS. 2-7 again, two latching blocks 113 are arranged circumferentially on the outer ring of the cartridge 10 corresponding to the atomizer device 20. The outer ring of the sealing base 234 protrudes toward the cartridge 10 to form a cylindrical latching portion 2341. The latching portion 2341 defines two latching slots 2342 engaging with the latching blocks 113. The latching slots 2342 extend in circumferential direction, to provide positioning space for the cartridge 10 and to limit the first position A and the second position B of the cartridge 10. The latching slots 2342 are arranged symmetrically opposite sides of the latching portion 2341, and the radian of the latching slots 2342 is less than 90 degrees to limit the rotation angle. The latching slots 2342 engage with the liquid outlets 122 and the liquid inlets 232. In other embodiments, the latching portion 2341 can be arranged at the base 21. The sleeve 34 sleeves on the periphery of the base 21 and the second cover body 23, to fix and protect the base 21 and the second cover body 23.

In some embodiments, the base 21 includes a connecting end 212 connected to the power supply device 30. The power supply device 30 is electrically connected to the heating member 26 for supplying power to heat and atomize the liquid solution sucked in the liquid suction body 25. The connecting end 212 defines an air inlet 2121 communicating with the second air flowing pipe 22. The power supply device 30 defines an air intake 31 to communicate with the air inlet 2121. When the smoker inhales, air flow into the second air pipe 22 by passing through the air intake 31 and the air inlet 2121 in turn. The atomized liquid solution together with air flow into the mouth of the smoker by passing through the second air flowing channel 221, the air vent 233, and the first air flowing channel 1111 in turn.

It is noteworthy that, the above-mentioned technical features can be used in any combination without restriction.

The disclosure described above of the present invention is illustrative but not restrictive scope of the present invention. Any equivalent structure, or equivalent process transformation, or directly or indirectly usage in other related technical field, all those be made in the same way are included within the protection scope of the present invention according to the appended claims.

## Claims

1. An electronic cigarette, comprising:
a cartridge (10) comprising a liquid reservoir chamber (112) and at least one liquid outlet (122) for communicating the internal of the liquid reservoir chamber (112) with the outside;
an atomizer device (20) comprising a liquid reservoir room (211) and at least one liquid inlet (232) for communicating the internal of the liquid reservoir room (211) with the outside;
wherein the cartridge (10) is mounted to the atomizer device (20), and is capable of rotating relatively to the atomizer device (20) between a first position A and a second position B; when the cartridge (10) is located at the first position A, the at least one liquid outlet (122) aligns with the at least one liquid inlet (232), to communicate the liquid reservoir chamber (112) with the liquid reservoir room (211); when the cartridge (10) is located at the second position B, the at least one liquid outlet (122) misaligns with the at least one liquid inlet (232), to disconnect the liquid reservoir chamber (112) with the liquid reservoir room (211).

2. The electronic cigarette as described in claim 1, wherein the cartridge (10) and the atomizer device (20) are installed together coaxially, the cartridge (10) is capable of rotating around the axis thereof relatively to the atomizer device (20) between the first position A and the second position B; the at least one liquid inlet (232) is defined at an end portion of the atomizer device (20) opposite to the cartridge (10), and the at least one liquid outlet (122) is defined at an end portion of the cartridge (10) opposite to the atomizer device (20).

3. The electronic cigarette as described in claim 2, wherein the cartridge (10) comprises a first air flowing channel (1111) arranged longitudinally, the liquid reservoir chamber (112) encircles the first air flowing channel (1111); the atomizer device (20) comprises a second air flowing channel (221) arranged longitudinally, the liquid reservoir room (211) encircles the second air flowing channel (221), and the first air flowing channel (1111) communicates with the second air flowing channel (221).

4. The electronic cigarette as described in claim 3, wherein the cartridge (10) comprises a first wall portion facing the atomizer device (20), the at least one liquid outlet (122) is defined on the first wall portion; the atomizer device (20) comprises a second wall portion facing the cartridge (10), the first wall portion is rotatable around the axis and abuts against the second wall portion, the at least one liquid inlet (232) is defined on the second wall portion.

5. The electronic cigarette as described in claim 4, wherein the at least one liquid inlet (232) comprises two liquid inlets arranged symmetrically at the second wall portion; the at least one liquid outlet (122) comprises two liquid outlets arranged symmetrically at the first wall portion.

6. The electronic cigarette as described in claim 5, wherein the shape of the liquid inlets (232) and the liquid outlets (122) are both fan-shaped, the two liquid outlets (122) are rotationally symmetrical relatively to the center of the axis, the two liquid inlets (232) are rotationally symmetrical relatively to the center of the axis.

7. The electronic cigarette as described in claim 4, wherein the cartridge (10) comprises a cartridge body (11) and a first cover body (12) arranged at an end portion of the cartridge body (11), the cartridge body (11) comprises a first air flowing pipe (111) defining the first air flowing channel (1111), the first wall portion is arranged on the first cover body (12), the first cover body (12) engages with the cartridge body (11) in interference fit; the first cover body (12) defines a sleeving hole (121) at the middle thereof, the sleeving hole (121) sleeves the outside of the first air flowing pipe (111).

8. The electronic cigarette as described in claim 7, wherein the atomizer device (20) comprises a second cover body (23) engaging with the cartridge (10), the second wall portion is arranged on the second cover body (23); the second cover body (23) comprises a plastic sealing base (234) which is integrally formed and an elastic glue sealing gasket (235), the sealing gasket (235) is clipped between the sealing base (234) and the first cover body (12), the liquid inlets (232) extends through the sealing base (234) and the sealing gasket (235).

9. The electronic cigarette as described in claim 8, wherein a first protruding portion (2351) is set on a surface of the sealing gasket (235) facing the first wall portion for reducing friction, the first protruding portion (2351) comprises a plurality of ring shaped protrusions arranged equidistant from the axis, the protrusions abut against and engage with the first wall portion.

10. The electronic cigarette as described in claim 8 or claim 9, wherein a second protruding portion (2352) is arranged on a surface of the sealing gasket (235) facing the first wall portion and encircles a rim of the liquid inlets (232), the second protruding portion (2352) abuts against and engages with the first wall portion.

11. The electronic cigarette as described in claim 8, wherein the atomizer device (20) comprises a base (21) and a second air flowing pipe (22), the second cover body (23) engages with an open end of the base (21), the second air flowing pipe (22) is embedded in the base (21), the second air flowing channel (221) is defined in the second air flowing pipe (22), the second cover body (23) defines an air vent (233) communicating with the first air flowing channel (1111) and the second air flowing channel (221) respectively; the sealing gasket (235) further comprises a third protruding portion (2353) extending from the outer ring of the air vent (233) toward the inner side of the second air flowing pipe (22), the third protruding portion (2353) engages with the internal wall of the second air flowing pipe (22).

12. The electronic cigarette as described in claim 11, wherein the sealing gasket (235) further comprises a fourth protruding portion (2354) extending from the outer ring of the air vent (233) toward the inner side of the first air flowing pipe (111), the fourth protruding portion (2354) engages with the internal wall of the first air flowing pipe (111).

13. The electronic cigarette as described in each one of claims 2-9, wherein at least one latching block (113) is arranged circumferentially on the outer ring of the cartridge (10) corresponding to the atomizer device (20), the atomizer device (20) defines at least one latching slot (2342) engaging with the at least one latching block (113), the at least one latching slot (2342) extends in circumferential direction, to provide rotation space for the cartridge (10) and to limit the first position A and the second position B of the cartridge (10).

14. The electronic cigarette as described in claim 13, wherein the at least one latching block (113) comprises two, the two latching blocks (113) are arranged symmetrically at opposite sides of cartridge (10), the at least one latching slots (2342) comprises two, the two latching slots (2342) are arranged symmetrically at opposite sides of atomizer device (20).

## Patentansprüche

1. Elektronische Zigarette, umfassend:
eine Kartusche (10) mit einer Flüssigkeitsspeicherkammer (112) und zumindest einem Flüssigkeitsauslass (122), der das Innere der Flüssigkeitsspeicherkammer (112) mit der Umgebung verbindet;
eine Verdampfereinheit (20) umfassend einen Flüssigkeitsspeicherraum (211) und zumindest einen Flüssigkeitseinlass (232), der das Innere der Flüssigkeitsspeicherkammer (211) mit der Umgebung verbindet;
wobei die Kartusche (10) an der Verdampfereinheit (20) angebracht ist und relativ zur Verdampfereinheit (20) zwischen einer ersten Position A und einer zweiten Position B drehbar ist; wenn sich die Kartusche (10) in der ersten Position A befindet, fluchtet der zumindest eine Flüssigkeitsauslass (122) mit dem zumindest einen Flüssigkeitseinlass (232) um die Flüssigkeitsspeicherkammer (112) mit dem Flüssigkeitsspeicherraum (211) zu verbinden; wenn sich die Kartusche (10) in der zweiten Position B befindet, fluchtet der zumindest eine Flüssigkeitsauslass (122) nicht mit dem zumindest einen Flüssigkeitseinlass (232) um die Verbindung zwischen der Flüssigkeitsspeicherkammer (112) und dem Flüssigkeitsspeicherraum (211) zu unterbrechen.

2. Elektronische Zigarette gemäß Anspruch 1, wobei die Kartusche (10) und die Verdampfereinheit (20) koaxial zueinander angeordnet sind, die Kartusche (10) um die Achse relativ zur Verdampfereinheit (20) zwischen der ersten Position A und der zweiten Position B drehbar ist; der zumindest eine Flüssigkeitseinlass (232) ein der Kartusche (10) gegenüberliegender Endabschnitt der Verdampfereinheit (20) ist, und der zumindest eine Flüssigkeitsauslass (122) ein der Verdampfereinheit (20) gegenüberliegender Endabschnitt der Kartusche (10) ist.

3. Elektronische Zigarette gemäß Anspruch 2, wobei die Kartusche (10) einen longitudinal angeordneten ersten Luftströmungskanal (1111) umfasst, die Flüssigkeitsspeicherkammer (112) den ersten Luftströmungskanal (1111) umgibt; die Verdampfereinheit (20) einen longitudinal angeordneten zweiten Luftströmungskanal (221) umfasst, der Flüssigkeitsspeicherraum (211) den zweiten Luftströmungskanal (221) umgibt, und der erste Luftströmungskanal (1111) mit dem zweiten Luftströmungskanal (221) verbunden ist.

4. Elektronische Zigarette gemäß Anspruch 3, wobei die Kartusche (10) einen der Verdampfereinheit (20) zugewandten ersten Wandabschnitt umfasst, der zumindest eine Flüssigkeitsauslass (122) auf den ersten Wandabschnitt gerichtet ist; die Verdampfereinheit (20) einen der Kartusche (10) zugewandten zweiten Wandabschnitt umfasst, der erste Wandabschnitt drehbar um die Achse ist und an den zweiten Wandabschnitt grenzt, der zumindest eine Flüssigkeitseinlass (232) auf den zweiten Wandabschnitt gerichtet ist.

5. Elektronische Zigarette gemäß Anspruch 4, wobei der zumindest eine Flüssigkeitseinlass (232) zwei am zweiten Wandabschnitt symmetrisch angeordnete Flüssigkeitseinlässe umfasst; der zumindest eine Flüssigkeitsauslass (122) zwei am ersten Wandabschnitt symmetrisch angeordnete Flüssigkeitsauslässe umfasst.

6. Elektronische Zigarette gemäß Anspruch 5, wobei die Form der Flüssigkeitseinlässe (232) und der Flüssigkeitsauslässe (122) jeweils fächerförmig ist, die zwei Flüssigkeitsauslässe (122) relativ zum Zentrum der Achse rotationssymmetrisch sind, die beiden Flüssigkeitseinlässe (232) relativ zum Zentrum der Achse rotationssymmetrisch sind.

7. Elektronische Zigarette gemäß Anspruch 4, wobei die Kartusche (10) ein Kartuschengehäuse (11) und eine an einem ersten Endabschnitt des Kartuschengehäuses (11) angeordnete erste Abdeckung (12) umfasst, das Kartuschengehäuse (11) ein erstes Luftströmungsrohr (111) umfasst, das den ersten Luftströmungskanal (1111) bildet, der erste Wandabschnitt auf der ersten Abdeckung (12) angeordnet ist, die erste Abdeckung (12) über eine Presspassung in das Kartuschengehäuse (11) greift; die erste Abdeckung (12) in seiner Mitte eine schlauchförmige Hülse (121) bildet, die die Außenseite des ersten Luftströmungsrohres (111) umschließt.

8. Elektronische Zigarette gemäß Anspruch 7, wobei die Verdampfereinheit (20) ein in die Kartusche (10) greifendes zweites Abdeckgehäuse (23) umfasst, der zweite Wandabschnitt auf dem zweiten Abdeckgehäuse (23) angeordnet ist; das zweite Abdeckgehäuse (23) einen integral angeformten Kunststoffdichtsitz (234) und eine elastische Klebedichtung (235) umfasst, die Dichtung (235) zwischen dem Dichtsitz (234) und der ersten Abdeckung (12) eingeklipst ist, sich die Flüssigkeitseinlässe (232) über den Dichtungssitz (234) und die Dichtung (235) erstrecken.

9. Elektronische Zigarette gemäß Anspruch 8, wobei ein erster vorstehender Abschnitt (2351) auf eine Oberfläche der Dichtung (235) aufgesetzt und dem ersten Wandabschnitt zur Reibungsreduktion zugewandt ist, der erste vorstehende Abschnitt (2351) eine Mehrzahl ringförmiger Vorsprünge umfasst, die äquidistant zur ersten Achse angeordnet sind, an den ersten Wandabschnitt angrenzen und in den ersten Wandabschnitt greifen.

10. Elektronische Zigarette gemäß Anspruch 8 oder 9, wobei ein zweiter vorstehender Abschnitt (2352) auf einer Oberfläche der Dichtung (235) angeordnet ist, der dem ersten Wandabschnitt zugewandt ist und einen Rand der Flüssigkeitseinlässe (232) umgibt, der zweite vorstehende Abschnitt (2352) an den ersten Wandabschnitt angrenzt und darin eingreift.

11. Elektronische Zigarette gemäß Anspruch 8, wobei die Verdampfereinheit (20) eine Basis (21) und ein zweites Luftströmungsrohr (22) umfasst, das zweite Abdeckgehäuse (23) in ein offenes Ende der Basis (21) greift, das zweite Luftströmungsrohr (22) in die Basis (21) eingebettet ist, das zweite Luftströmungsrohr (22) den zweiten Luftströmungskanal (221) bildet, das zweite Abdeckgehäuse (23) eine Entlüftung (233) bildet, das den ersten Luftströmungskanal (221) und entsprechend den zweiten Luftströmungskanal (221) verbindet; die Dichtung (235) weiter einen dritten vorstehenden Abschnitt (2353) umfasst, der sich vom äußeren Ring der Entlüftung (233) in Richtung der Innenseite des zweiten Luftströmungsrohres (22) erstreckt, der dritte vorstehende Abschnitt (2353) in die innere Wand des zweiten Luftströmungsrohres (22) greift.

12. Elektronische Zigarette gemäß Anspruch 11, wobei die Dichtung (235) weiter einen vierten vorstehenden Abschnitt (2354) aufweist, der sich vom äußeren Ring der Entlüftungsöffnung (233) in Richtung der Innenseite des ersten Luftströmungsrohres (22) erstreckt, der vierte vorstehende Abschnitt (2354) in die innere Wand des ersten Luftströmungsrohr (22) greift.

13. Elektronische Zigarette gemäß einem der Ansprüche 2-9, wobei zumindest ein mit der Verdampfereinheit (20) verbundener Einrastblock (113) um den äußeren Ring der Kartusche (10) angeordnet ist, die Verdampfereinheit (20) zumindest eine in den Einrastblock (113) greifende Einrastnut (2342) bildet, die zumindest eine Einrastnut (2342) sich in umlaufender Richtung erstreckt, um der Kartusche (10) Raum zur Drehung zu geben und die erste Position A und die zweite Position B der Kartusche (10) zu begrenzen.

14. Elektronische Zigarette gemäß Anspruch 13, wobei der zumindest eine Einrastblock (113) zwei umfasst, die zwei Einrastblöcke (113) symmetrisch an gegenüberliegenden Seiten der Kartusche (10) angeordnet sind, der zumindest eine Einrastnut (2342) zwei umfasst, die zwei Einrastnuten (2342) symmetrisch an gegenüberliegenden Seiten der Verdampfereinheit (20) angeordnet sind.

## Revendications

1. Une cigarette électronique, comprenant :
une cartouche (10) comprenant une chambre (112) formant réservoir à liquide et au moins une sortie (122) pour du liquide pour mettre l'intérieur de la chambre (112) formant réservoir à liquide en communication avec l'extérieur ;
un dispositif (20) atomiseur comprenant un espace (211) formant réservoir à liquide et au moins une entrée (232) pour du liquide pour mettre l'intérieur de l'espace (211) formant réservoir à liquide en communication avec l'extérieur ;
dans laquelle la cartouche (10) est montée sur le dispositif (20) atomiseur et est apte à tourner par rapport au dispositif (20) atomiseur entre une première position A et une seconde position B ; lorsque la cartouche (10) est mise à la première position A, la au moins une sortie (122) pour du liquide s'aligne avec la au moins une entrée (232) pour du liquide pour mettre la chambre (112) formant réservoir à liquide en communication avec l'espace (211) formant réservoir à liquide ; lorsque la cartouche (140) est mise à la seconde position B, la au moins une sortie (122) pour du liquide se désaligne de la au moins une entrée (232) pour du liquide, afin de ne plus faire communiquer la chambre (112) formant réservoir pour du liquide avec l'espace (211) formant réservoir pour du liquide.

2. La cigarette électronique telle que décrite à la revendication 1, dans laquelle la cartouche (10) et le dispositif (20) atomiseur sont montés ensemble coaxialement, la cartouche (10) est apte à tourner autour de son axe par rapport au dispositif (20) atomiseur entre la première position A et la seconde position B ; la au moins une entrée (232) pour du liquide est définie à une partie d'extrémité du dispositif (20) atomiseur opposée à la cartouche (10) et la au moins une sortie (122) pour du liquide est définie à une partie d'extrémité de la cartouche (10) opposée au dispositif (20) atomiseur.

3. La cigarette électronique telle que décrite à la revendication 2, dans laquelle la cartouche (10) comprend un premier conduit (1111) d'écoulement d'air disposé longitudinalement, la chambre (112) formant réservoir à liquide encercle le premier conduit (1111) d'écoulement d'air ; le dispositif (20) atomiseur comprend un deuxième conduit (221) d'écoulement d'air disposé longitudinalement, l'espace (211) formant réservoir à liquide encercle le deuxième conduit (221) d'écoulement d'air et le premier conduit (1111) d'écoulement d'air communique avec le deuxième conduit (221) d'écoulement d'air.

4. La cigarette électronique telle que décrite à la revendication 3, dans laquelle la cartouche (10) comprend une première partie de paroi faisant face au dispositif (20) atomiseur, la au moins une sortie (122) pour du liquide étant définie sur la première partie de paroi ; le dispositif (20) atomiseur comprend une deuxième partie de paroi faisant face à la cartouche (10), la première partie de paroi pouvant tourner autour de l'axe et buter sur la deuxième partie de paroi, la au moins une entrée (232) pour du liquide est définie sur la deuxième partie de paroi.

5. La cigarette électronique telle que décrite à la revendication 4, dans laquelle la au moins une entrée (232) pour du liquide comprend deux entrées pour du liquide disposées symétriquement sur la deuxième partie de paroi ; la au moins une sortie (122) pour du liquide comprend deux sorties pour du liquide disposées symétriquement sur la première partie de paroi.

6. La cigarette électronique telle que décrite à la revendication 5, dans laquelle les formes des entrées (232) pour du liquide et des sorties (122) pour du liquide sont toutes deux en éventail, les deux sorties (122) pour du liquide sont à symétrie de rotation par rapport au sens de l'axe, les deux entrées (232) pour du liquide sont à symétrie de rotation par rapport au centre de l'axe.

7. La cigarette électronique telle que décrite à la revendication 4, dans laquelle la cartouche (10) comprend un corps (11) de cartouche et un premier corps (12) de couvercle mis à une partie d'extrémité du corps (11) de cartouche, le corps (11) de cartouche comprend un premier tuyau (111) d'écoulement d'air définissant le premier conduit (11110) d'écoulement d'air, la première partie de paroi est disposée sur le premier corps (12) de couvercle, le premier corps (12) de couvercle s'enclenche avec le corps (11) de cartouche suivant un ajustement serré ; le premier corps (12) de couvercle défini un trou (121) de manchonnage en son milieu, le trou (121) de manchonnage manchonnant l'extérieur du premier tuyau (111) d'écoulement d'air.

8. La cigarette électronique telle que décrite à la revendication 7, dans laquelle le dispositif (20) atomiseur comprend un deuxième corps (23) de couvercle s'enclenchant avec la cartouche (10), la deuxième partie de paroi est disposée sur le deuxième corps (23) de couvercle ; le deuxième corps (23) de couvercle comprend une embase (234) d'étanchéité en matière plastique, qui en est partie intégrante, et une garniture (235) d'étanchéité élastique à col, la garniture (235) d'étanchéité étant serrée entre l'embase (234) d'étanchéité et le premier corps (12) de couvercle, les entrées (232) pour du liquide traversant l'embase (234) d'étanchéité et la garniture (235) d'étanchéité.

9. La cigarette électronique telle que décrite à la revendication 8, dans laquelle une première partie (2351) en saillie est mise sur une surface de la garniture (235) d'étanchéité faisant face à la première partie de paroi pour réduire le frottement, la première partie (2351) faisant saillie comprend une pluralité de protubérances en forme de bagues disposées en étant équidistantes de l'axe, les protubérances butant sur la première partie de paroi et coopérant avec elles.

10. La cigarette électronique telle que décrite à la revendication 8 ou la revendication 9, dans laquelle une deuxième partie (2352) faisant saillie est disposée sur une surface de la garniture (235) d'étanchéité faisant face à la première partie de paroi et encercle un bord des entrées (232) pour du liquide, la deuxième partie (2352) faisant saillie butant sur la première partie de paroi et coopérant avec elle.

11. La cigarette électronique telle que décrite à la revendication 8, dans laquelle le dispositif (20) atomiseur comprend une embase (21) et un deuxième tuyau (22) d'écoulement d'air, le deuxième corps (23) de couvercle coopérant avec une extrémité ouverte de la embase (21), le deuxième tuyau (22) d'écoulement d'air est incorporé dans l'embase (21), le deuxième conduit (221) d'écoulement d'air est défini dans le deuxième tuyau (22) d'écoulement d'air, le deuxième corps (23) de couvercle définit un évent (233) communiquant avec le premier conduit (1111) d'écoulement d'air et le deuxième conduit (221) d'écoulement d'air respectivement ; la garniture (235) d'étanchéité comprend, en outre, une troisième partie (2353) en saillie s'étendant de l'anneau extérieur de l'évent (233) en direction du côté intérieur du deuxième tuyau (22) d'écoulement d'air, la troisième partie (2353) en saillie coopérant avec la paroi intérieure du deuxième tuyau (22) d'écoulement d'air.

12. La cigarette électronique telle que décrite à la revendication 11, dans laquelle la garniture (235) d'étanchéité comprend, en outre, une quatrième partie (2354) en saillie s'étendant de l'anneau extérieur de l'évent (233) en direction du côté intérieur du premier tuyau (111) d'écoulement d'air, la quatrième partie (2354) en saillie coopérant avec la paroi intérieure du premier tuyau (111) d'écoulement d'air.

13. La cigarette électronique telle que décrite dans chacune des revendications 2 à 9, dans laquelle au moins un bloc (113) de verrouillage est disposé circonférentiellement sur l'anneau extérieur de la cartouche (10) en correspondance au dispositif (20) atomiseur, le dispositif (20) atomiseur définit au moins une fente (2342) de verrouillage s'enclenchant avec le au moins un bloc (113) de verrouillage, la au moins une fente (2342) de verrouillage s'étend dans une direction circonférentielle pour procurer un espace de rotation à la cartouche (10) et pour délimiter la première position A et la seconde position B de la cartouche (10).

14. La cigarette électronique telle que décrite à la revendication 13, dans laquelle le au moins un bloc (113) de verrouillage en comprend deux, les deux blocs (113) de verrouillage sont disposés symétriquement sur des côtés opposés de la cartouche (10), la au moins une fente (2342) de verrouillage en comprend deux, les deux fentes (2342) sont disposées symétriquement sur des côtés opposés du dispositif (20) atomiseur.
